# EUROPÄISCHE PATENTSCHRIFT

(11) **EP 1 714 056 B1**
(45) Veröffentlichungstag und Bekanntmachung des Hinweises auf die Patenterteilung: **09.04.2008**
(21) Anmeldenummer: 05701301.3
(22) Anmeldetag: 02.02.2005
(51) Int. Cl.: F16H 61/28, F15B 11/00, F15B 20/00, F15B 11/16

(54) **SCHALTEINHEIT**
SHIFTING UNIT
UNITE DE COMMUTATION

(30) Priorität: 11.02.2004 DE 102004006683
(43) Veröffentlichungstag der Anmeldung: 25.10.2006
(73) Patentinhaber: ZF FRIEDRICHSHAFEN AG, 88038 Friedrichshafen (DE)
(72) Erfinder: STEINBORN, Mario, 88045 Friedrichshafen (DE); PETZOLD, Rainer, 88045 Friedrichshafen (DE); MILLER, Martin, 88090 Immenstaad (DE)
(86) Internationale Anmeldenummer: PCT/EP2005/001008
(87) Internationale Veröffentlichungsnummer: WO 2005/078318

(56) Entgegenhaltungen:
- EP-A- 0 978 440
- EP-A- 1 338 802
- DE-A1- 19 756 638
- GB-A- 2 163 224
- US-B1- 6 467 264

## Beschreibung

Die Erfindung betrifft eine Schalteinheit nach der im Oberbegriff von Anspruch 1 näher definierten Art.

Moderne Getriebe, vor allem in Nutzfahrzeugen, werden immer häufiger elektronisch gesteuert, wobei die Schaltkräfte pneumatisch oder hydraulisch erzeugt werden, welche die Schaltgeschwindigkeit sowie den Schaltkomfort verbessern. Getriebe von größeren Nutzfahrzeugen sind des öfteren in ein Hauptgetriebe, ein Split-Gruppengetriebe und ein Bereichsgruppengetriebe aufgeteilt. Diese weisen eine beispielsweise durch eine Pneumatik untersützte Schalteinheit auf, die pneumatische Schaltungen im Split-Gruppengetriebe und im Bereichs-Gruppengetriebe durchführt, während die Schaltungen im Hauptgetriebe durch Synchronisierung mit Hilfe einer Getriebebremse bei Hochschaltungen und mit Hilfe des Motors bei Rückschaltungen in der ausübenden Kraft durch die Pneumatik unterstützt werden können.

Eine solche Schalteinheit für ein Getriebe ist beispielsweise in der DE 100 29 497 A1 beschrieben. Diese elektropneumatische Schalteinheit für ein Fahrzeuggetriebe, das ein über Ventile pneumatisch geschaltetes Split-Gruppengetriebe und ein über Ventile pneumatisch geschaltetes Bereichsgruppengetriebe aufweist, erfordert für jede Schaltkammer eines Schaltzylinders ein Öffnungs- und ein Schließventil, die über eine Zuluft- und eine Abluftleitung mit den Zylinderkammern verbunden sind. Fällt nur eines dieser Ventile aus, kann die Funktionalität dieses Ventils für die jeweilige Zylinderkammer nicht mehr verändert werden, wodurch die Verfügbarkeit des Gesamtsystems eingeschränkt wird und in bestimmten Fällen nicht mehr zur Verfügung steht. Zusätzlich ist die Dynamik der Schaltzylinder sehr begrenzt.

Aus der DE 197 56 638 A1 der Anmelderin ist eine Schalteinheit mit mehreren Schaltzylindern bekannt, die eine Druckzufuhrteitung und eine Druckabfuhrleitung aufweisen, Beim Umschalten in einen anderen Gang wird die Druckabfuhrleitung afs Druckzufuhrleitung verwendet, Hierzu wird ein Umschaltventil verwendet, das die Drücke in den Ladungen vertauscht.

Der vorliegenden Erfindung liegt die Aufgabe zugrunde, eine uneingeschränkte Verfügbarkeit der Schalteinheit auch bei Ventilfehlern darzustellen, ohne dabei eine komplizierte, störungsanfällige, zusätzlichen Bauraum benötigende Lösung darzustellen. Weiterhin soll die Schalteinheit das dynamische Verhalten des Getriebegesamtsystems verbessern.

Die der Erfindung zugrunde liegende Aufgabe wird durch eine, auch die kennzeichnenden Merkmale des Hauptanspruchs aufweisende, gattungsgemäße Schalteinheit gelöst.

Eine vollständige Verfügbarkeit des Getriebegesamtsystems bei Einzelfehlern in der Schalteinheit läßt sich dadurch erreichen, dass durch Zusatzventile die Druckzufuhr- und Druckabfuhrleitung getrennt voneinander geschlossen und geöffnet werden können. Jede Zylinderkammer wird mit mindestens einem Ventil mit Offnungs- und Schließfunktionen bestückt. Dadurch ist es möglich, die Funktionalität der Ventile auszutauschen, wodurch die Funktion eines jeden Schaltventils umgedreht werden kann. Bei Ventilfehlem, z. B. durch einen Kurzschluß oder die Unterbrechung der Stromzufuhr, ist das Ventil in einer Endposition, die es nicht mehr verlassen kann und somit die zweite Position nicht mehr eingenommen werden kann. Infolgedessen funktioniert die Be- und Entlüftung der jeweiligen Zylinderkammer nicht mehr, was zu einem Ausfall der Funktionalität des Ventils führt. Durch die Möglichkeit der Umkehr bzw. Sperrung und Öffnung der Zu- und Abluft übernimmt das zweite Ventil der Zylinderkammer die ausgefallene Funktion des ersten Ventils der Zylinderkammer. Zusätzlich können durch entsprechende Ventilbeschaltung die dynamischen Eigenschaften, wie Ansprechzeiten, Beschleunigungen von Zylinderkolben, Dämpfungen usw., verbessert werden.

Durch Anordnung eines oder mehrerer Ventile in Druckzufuhr- und Druckabfuhrleitung kann jede Leitung im Inneren des Systems eine Zu- oder Abfuhrleitung oder ein geschlossenes System (Kapselung) sein. Weiterhin können alle Leitungen Druck zuführen oder abführen oder sperren. Dadurch kann jedes Ventil mehrere Aufgabe erfüllen (Druckzuführen oder Druckabführen oder Sperrren).

Eine vollständige Verfügbarkeit bei Einzelventilfehlern läßt sich dadurch erreichen, dass durch die Anordnung eines oder mehrerer Ventile in Druckzufuhr- und Druckabfuhrleitung die Druckversorgungs- und Druckabfuhrleitungen ausgetauscht werden können. Dadurch kann die Funktion eines jeden Ventils umgedreht werden. Ist beispielsweise ein Ventil in der Versorgungsleitung durch Kurzschluß permanent geöffnet und im Zylinderraum soll Druck abgebaut werden, werden die Versorgungsleitungen vertauscht. Dabei bewirkt das defekt Ventil eine Druckreduzierung in der Zylinderkammer. Eine weitere Verbesserung läßt sich durch getrenntes Öffnen und Schließen sowie Sperren (Dämpfung) der Druckversorgungs- und Druckabfuhrleitungen erzielen.

Eine Veränderung der Dynamik kann z. B. dadurch erreicht werden, dass alle inneren Systemleitungen Druckzufuhr- oder Druckabfuhrleitungen oder geschlossen sind. Weiterhin kann auch eine Leitung Druckzufuhrleitung sein und die andere ist geschlossen. Weiterhin kann auch eine Leitung Druckabfuhrleitung sein und die andere ist geschlossen.

Durch die Möglichkeit der Umkehr bzw. Sperrung und Öffnung der Druckzu- und Druckabfuhr wird die ausgefallene Funktion des Ventils der Zylinderkammer trotzdem zur Verfügung gestellt.

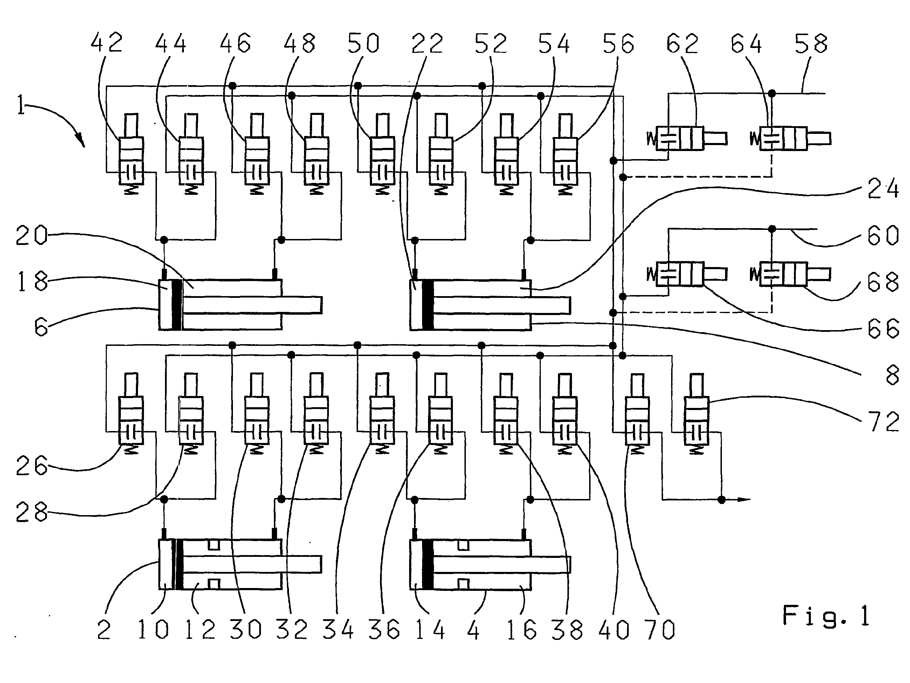

Nachfolgend wird die Erfindung anhand eines in der Figur dargestellten Ausführungsbeispiels näher erläutert.

Die einzige Figur zeigt die für die Erfindung wesentlichen Teile einer erfindungsgemäßen Schalteinheit 1 für ein automatisches Schaltgetriebe mit einem Grundgetriebe, einem Split-Gruppengetriebe, einem Bereichsgruppengetriebe und einer Getriebebremse.

Die Schalteinheit 1 weist Schaltzylinder 2, 4, 6 und 8 auf, die in einem gemeinsamen, nicht dargestellten Gehäuse untergebracht werden können. Der Schaltzylinder 2 weist Schaltkammern 10 und 12, der Schaltzylinder 4 Schaltkammern 14 und 16, der Schaltzylinder 6 Schaltkammern 18 und 20 sowie der Schaltzylinder 8 Schaltkammern 22 und 24 auf. Die Schaltkammer 10 des Schaltzylinders 2 ist mit einem Öffnungsventil 26 und einem Schließventil 28 verbunden. Die Schaltkammer 12 des Schaltzylinders 2 ist mit einem Öffnungsventil 30 und einem Schließventil 32 verbunden. Die Schaltkammer 14 des Schaltzylinders 4 ist mit einem Öffnungsventil 34 und einem Schließventil 36 verbunden. Die Schaltkammer 16 des Schaltzylinders 4 ist mit einem Öffnungsventil 38 und einem Schließventil 40 verbunden. Die Schaltkammer 18 des Schaltzylinders 6 ist mit einem Öffnungsventil 42 und einem Schließventil 44 verbunden. Die Schaltkammer 20 des Schaltzylinders 6 ist mit einem Öffnungsventil 46 und einem Schließventil 48 verbunden. Die Schaltkammer 22 des Schaltzylinders 8 ist mit einem Öffnungsventil 50 und einem Schließventil 52 verbunden. Die Schaltkammer 24 des Schaltzylinders 8 ist mit einem Öffnungsventil 54 und einem Schließventil 56 verbunden. Die Öffnungsventile 26, 30, 34, 38, 42, 46, 50 und 54 sind über ein Zusatzventil 62 mit einer Zuluftleitung 58 und über ein Zusatzventil 68 mit einer Abluftleitung 60 verbunden. Die Schließventile 28, 32, 36, 40, 44, 48, 52 und 56 sind über Zusatzventile 64 und 66 mit einer Abluftleitung 60 verbunden. Durch die Zusatzventile 62, 64, 66 und 68 können die Zuluftleitung 58 und die Abluftleitung 60 getrennt voneinander geschlossen, geöffnet und/oder in ihrer Funktion ausgetauscht werden. Dadurch wird ermöglicht, dass die Öffnungsventile 26, 30, 34, 38, 42, 46, 50 und 54 die Funktionen der Schließventile 28, 32, 36, 40, 44, 48, 52 und 56 übernehmen können und umgekehrt. Der Schaltzylinder 2 ist in dem beschriebenen Ausführungsbeispiel für das Schalten der Gänge R und 1 im Grundgetriebe, der Schaltzylinder 4 für das Schalten der Gänge 2 und 3 im Grundgetriebe, der Schaltzylinder 6 für das Schalten des Split-Gruppengetriebes und der Schaltzylinder 8 für das Schalten des Bereichsgruppengetriebe zuständig. Ein Schaltventil 70 ist mit der Zuluftleitung 58 und das Schaltventil 72 mit der Abluftleitung 60 verbunden. Über die Schaltventile 70 und 72 ist die nicht dargestellte Getriebebremse mit der Zuluftleitung 58 und der Abluftleitung 60 verbunden.

### Bezugszeichen

- 1: Schalteinheit
- 2: Schaltzylinder
- 4: Schaltzylinder
- 6: Schaltzylinder
- 8: Schaltzylinder
- 10: Schaltkammer
- 12: Schaltkammer
- 14: Schaltkammer
- 16: Schaltkammer
- 18: Schaltkammer
- 20: Schaltkammer
- 22: Schaltkammer
- 24: Schaltkammer
- 26: Öffnungsventil
- 28: Schließventil
- 30: Öffnungsventil
- 32: Schließventil
- 34: Öffnungsventil
- 36: Schließventil
- 38: Öffnungsventil
- 40: Schließventil
- 42: Öffnungsventil
- 44: Schließventil
- 46: Öffnungsventil
- 48: Schließventil
- 50: Öffnungsventil
- 52: Schließventil
- 54: Öffnungsventil
- 56: Schließventil
- 58: Zuluftleitung
- 60: Abluftleitung
- 62: Zusatzventil
- 64: Zusatzventil
- 66: Zusatzventil
- 68: Zusatzventil
- 70: Schaltventil
- 72: Schaltventil

## Patentansprüche

1. Schalteinheit (1) für ein Fehrzeuggetriebe mit Ventilen, die über eine Druckzufuhrleitung (58) und eine Druckabfuhrleitung (60) miteinander verbunden und einer Schaltkammer (10) eines Schaltzylinders (2) zugeordnet sind, wobei jede Schaltkammer (10) des Schaltzylinders (2) mindestens ein Ventil (26) aufweist, das die Funktion eines Öffnungsventils (26) und eines Schließventils (20) darsiellen kann, und dass durch Zusatzventile (62, 64, 66, 68) die Druckzufuhrleitung (58) und die Druckabfuhrieitung (60) getrennt geschlossen, geöffnet, gesperrt und/oder getauscht werden können, **dadurch gekennzeichnet, dass** bei Ausfall des der Schaltkammer (10) des Schaltzylinders (2) zugeordneten Öffnungsventils (26) das der Schaltkammer (10) des Schaltzylinders (2) zugeordnete Schließventil (28) jeweils die Funktion des der Schaltkammer (10) zugeordneten Öffnungsventils (26) übernimmt und umgekehrt.

2. Schalteinheit (1) nach Anspruch 1, **dadurch gekennzeichnet, dass** das Öffnungsventil (26) und das Schließventil (28) Wegeventile, Proportionalventile oder Kombinationen davon sind.

## Claims

1. Control element (1) for a vehicle transmission, with valves being interconnected by a pressure supply line (58) and a pressure discharge line (60) and assigned to a shift chamber (10) of a shift cylinder (2), with each shift chamber (10) of the shift cylinder (2) featuring at least one valve (26) that can function as an opening valve (26) and as a dosing valve (28), and with additional valves (62, 64, 66, 68) permitting the pressure supply line (58) and the pressure discharge line (60) to be separately opened, dosed and/or interchanged, **characterized in that** in the event of failure of the opening valve (26) assigned to the shift chamber (10) of the shift cylinder (2), the closing valve (28) assigned to the shift chamber (10) of the shift cylinder (2) takes over the function of the opening valve (26) assigned to the shift chamber (10), and vice versa.

2. Control element (1) according to claim 1, **characterized in that** the opening valve (26) and the dosing valve (28) are directional valves, proportional valves, or combinations of these.

## Revendications

1. Unité de changement de vitesses (1) dune transmission pour véhicules dotée de soupapes, celles-ci étant liées par une conduite d'amenée d'air comprimé (58) et une conduite d'évacuation d'air comprimé (60) les unes aux autres, et étant associées à une chambre de commande (10) d'un vérin de commande (2), sachant que chaque chambre de commande (10) du vérin de commande (2) comporte au moins un vérin (26), celui-ci pouvant avoir la fonction d'un vérin d'ouverture (26) et d'un vérin de fermeture (28), et sachant qu'il est possible, à raide de vérins supplémentaires (62, 64, 66, 68), de fermer, ouvrir, verrouiller et/ou remplacer séparément la conduite damenée d'air comprimé (58) et la conduite d'évacuation d'air comprimé (60), **caractérisée en ce que** en cas de défaillance de la soupape d'ouverture (26) associée à la chambre de commande (10) du vérin de commande (2), la soupape de fermeture (28) associée à la chambre de commande (10) du vérin de commande (2) assume la fonction du vérin d'ouverture (26) associée à la chambre de commande (10) et vice versa.

2. Unité de changement de vitesses (1) selon la revendication 1, **caractérisée en ce que** la soupape d'ouverture (26) et la soupape de fermeture (28) sont des distributeurs, des vannes proportionnelles ou des combinaisons de ceux-ci.
